# EUROPEAN PATENT APPLICATION

(11) **EP 2 397 207 A1**
(43) Date of publication of application: **21.12.2011**
(21) Application number: 11153630.6
(22) Date of filing: 08.02.2011
(51) Int. Cl.: B01D 17/02, C10G 33/00, E21B 43/34

(54) **System for separating a feed stream comprising at least three liquid phases**

(71) Applicant: Shell Internationale Research Maatschappij B.V., 2596 HR The Hague (NL)
(72) Inventor: Mans, Jeroen, 1031 HW Amsterdam (NL); Polderman, Hugo Gerardus, 1031 HW Amsterdam (NL)
(74) Representative: Matthezing, Robert Maarten

(57) **Abstract**

The present invention provides a system (1) for separating a feed stream (10) comprising at least three liquid phases into at least three different liquid streams (20,30,40), the system (1) comprising a first separator (2) and a second separator (3), wherein
- the first separator (2) comprises: an inlet (21) for receiving the feed stream (10); a first compartment (22) having a first overflow weir (23), a second overflow weir (24) and an underflow weir (25); a second compartment (26) that can receive liquid overflowing the second overflow weir (24) of the first compartment (22), the second compartment (26) having an outlet (27); a third compartment (28) that can receive liquid overflowing the first overflow weir (23) of the first compartment (22), the third compartment (28) having an outlet (29); and
- the second separator (3) comprises: an inlet (31) for receiving fluid leaving the outlet (29) of the third compartment (28) of the first separator (2); a first compartment (32) having a first overflow weir (33), a second overflow weir (34) and an underflow weir (35); a second compartment (36) that can receive liquid overflowing the first overflow weir (33) of the first compartment (32), the second compartment (36) having an outlet (37); a third compartment (38) that can receive liquid overflowing the second overflow weir (34) of the first compartment (32), the third compartment (38) having an outlet (39).

## Description

The present invention relates to a system and a method for separating a feed stream comprising at least three liquid phases.

In the prior art various separators are known, such as gas/liquid separators, gas/solid separators, liquid/solid separators, etc.

There is a constant desire for new and alternative separators.

It is an object of the present invention to provide an alternative separation system, in particular for separating a feed stream comprising at least three liquid phases.

It is a further object of the present invention to provide a system for separating a feed stream that has been obtained from an oil well that has been subjected to chemical Enhanced Oil Recovery (chemical EOR).

One or more of the above or other objects are achieved according to the present invention by providing a system for separating a feed stream comprising at least three liquid phases into at least three different liquid streams, the system comprising a first separator and a second separator, wherein
- the first separator comprises: an inlet for receiving the feed stream; a first compartment having a first overflow weir, a second overflow weir and an underflow weir; a second compartment that can receive liquid overflowing the second overflow weir of the first compartment, the second compartment having an outlet; a third compartment that can receive liquid overflowing the first overflow weir of the first compartment, the third compartment having an outlet; and
- the second separator comprises: an inlet for receiving fluid leaving the outlet of the third compartment of the first separator; a first compartment having a first overflow weir, a second overflow weir and an underflow weir; a second compartment that can receive liquid overflowing the first overflow weir of the first compartment, the second compartment having an outlet; a third compartment that can receive liquid overflowing the second overflow weir of the first compartment, the third compartment having an outlet.

An advantage of the present invention is that feed streams comprising at least three liquid phases can be separated in a very simple way, minimizing or even avoiding the need of flow controllers, level controllers and the like and avoiding risk of re-emulsification.

A further advantage of the present invention is that, in particular in the case wherein the feed stream has been obtained from an oil well that has been subjected to chemical EOR, the majority of the water and oil can be removed and the processing of the phase comprising an emulsion of water and oil (possibly also containing detergents and/or chemicals as used during the EOR) can be performed on a much smaller stream.

According to the present invention, the feed stream to be separated comprises at least three different liquid phases. In addition to the at least three liquid phases, the feed stream may contain one or more gases as well as solid materials, although it is preferred that any solid material has been removed before entering the separator to avoid clogging. Typically, the feed stream comprises at least three liquid phases having a different density. Preferably, the feed stream comprises at least a first, second and third liquid phase wherein the density of the first liquid phase is greater than the density of the second liquid phase and wherein the density of the second liquid phase is greater than the density of the third liquid phase.

Preferably the feed stream has been obtained from an oil well that has been subjected to chemical EOR. As chemical EOR is known in the prior art, this is not further described here. An exemplary chemical EOR process has been described in J.R. Barnes et al., "Developments of Surfactants for Chemical Flooding at Difficult Reservoir Conditions", SPE-113313-PP and presented at the 2008 SPE Improved Oil Recovery Symposium as held in Tulsa, Oklahoma, US on 19-23 April 2008, the teaching of which is hereby incorporated by reference.

Preferably, the feed stream to be separated comprises at least water as the first liquid phase, an emulsion of water and oil as the second liquid phase and oil as the third liquid phase. According to the present invention, the term "oil" is intended to refer to the liquid hydrocarbon-containing composition produced in a well; the person skilled in the art will understand that the composition of the liquid hydrocarbon-containing composition may vary broadly (e.g. dependent on the well) and may contain some solid material dispersed in it.

It is preferred according to the present invention that the inlet of the first separator feeds into the first compartment, preferably between the first overflow weir and the underflow weir of the first compartment. This prevents or minimizes the chance that the first liquid phase that is intended to overflow the second overflow weir of the first compartment in fact overflows the first overflow weir of the first compartment thereby entering the third compartment. Similarly, it is preferred that the inlet of the second separator feeds into the first compartment, preferably between the first overflow weir and the underflow weir of the first compartment.

The person skilled in the art readily understands that the overflow weirs and underflow weirs can be embodied in various ways. In a preferred embodiment the overflow and underflow weirs comprise substantially vertically arranged baffles which may be connected to the inner wall of the separator.

Also, each of the first and second separators may take various shapes, e.g. having a substantially cylindrical shaped horizontally or vertically oriented outer wall. Preferably the first and second separator have a substantially cylindrical shaped horizontally oriented outer wall.

In another aspect the present invention provides a method for separating a feed stream comprising at least three liquid phases into at least three different liquid streams, the method comprising at least the steps of:
(a) feeding the feed stream at an inlet of a first separator into a first compartment thereof;
(b) allowing a first liquid phase to overflow a second overflow weir of the first compartment to enter a second compartment and removing the first liquid phase in the second compartment from the first separator via an outlet;
(c) allowing a second and third liquid phase to overflow a first overflow weir of the first compartment to enter a third compartment;
(d) removing the second and third liquid phase in the third compartment from the first separator via an outlet and feeding it at a first inlet of a second separator into a first compartment thereof;
(e) allowing the second liquid phase to overflow a second overflow weir of the first compartment to enter a third compartment and removing the second liquid phase in the third compartment from the second separator via an outlet;
(f) allowing the third liquid phase to overflow a first overflow weir of the first compartment to enter a second compartment and removing the third liquid phase in the second compartment from the second separator via an outlet.

Preferably the feed stream entering the first compartment of the first and second separators has a low velocity in order to avoid that some of the phases (such as the water and oil phases) undergo emulsification; a typical velocity for the feed stream is below 1.0 m/s, preferably below 0.5 m/s.

As indicated above, preferably the density of the first liquid phase is greater than the density of the second liquid phase and wherein the density of the second liquid phase is greater than the density of the third liquid phase. Also it is preferred that the first liquid phase comprises water, the second liquid phase comprises an emulsion of water and oil and the third liquid phase comprises oil. It is even further preferred that the feed stream is obtained from a well that has been subjected to chemical Enhanced Oil Recovery (chemical EOR).

According to a preferred embodiment the first liquid phase, after being fed to the first compartment and before overflowing the second overflow weir of the first compartment of the first separator underflows an underflow weir. Also it is preferred that the second liquid phase, after entering the first compartment and before overflowing the second overflow weir of the first compartment of the second separator underflows an underflow weir.

According to an especially preferred embodiment of the present invention the feed stream has a temperature below the boiling temperature of water at the prevailing pressure. Preferably, the separator according to the present invention is operated at a pressure of from ambient pressure to about 10 bar, preferably below 5 bar.

Hereinafter the invention will be further illustrated by the following non-limiting drawing. Herein shows:
Fig. 1 schematically a schematic side view of a first embodiment of a system in accordance with the present invention;
Fig. 2 schematically a schematic top view of the separator of Fig. 1; and
Fig. 3 schematically a schematic side view of a second embodiment of a system in accordance with the present invention.

For the purpose of this description, same reference numbers refer to similar components.

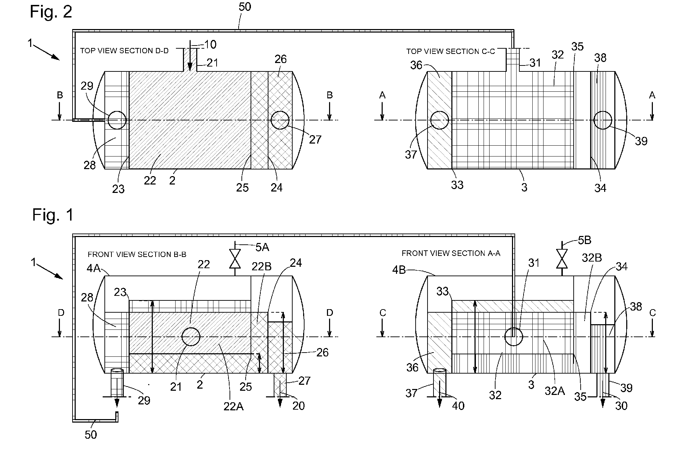

Figures 1 and 2 schematically show a system 1 (comprising a first separator 2 and a second separator 3) for separating a feed stream 10 comprising at least three liquid phases (the density of the first liquid phase being greater than the density of the second liquid phase and the density of the second liquid phase being greater than the density of the third liquid phase) into at least three different liquid streams.

Preferably, the feed stream 10 is obtained from a well (not shown) that has been subjected to chemical EOR. In the latter case, the feed stream 10 is separated in the system 1 to obtain three liquid phases which are removed from the system 1; the first liquid phase comprises water, the second liquid phase comprises an emulsion of water and oil and the third liquid phase comprises oil.

In the embodiment of Figure 1, the first separator 2 and second separator 3 both have a substantially cylindrical shaped horizontally oriented outer walls 4A and 4B. The first separator 2 comprises an inlet 21 for receiving the feed stream 10, which inlet 21 is typically positioned at the side of the first separator 2 and two outlets 27 and 29 (for respectively water and a stream 50 comprising oil and an emulsion of water and oil). The second separator 3 comprises an inlet 31 for receiving stream 50, which inlet 31 is typically positioned at the side of the second separator 3 and two outlets 37 and 39 (for respectively oil and an emulsion of water and oil). It goes without saying that the first separator 2 and second separator 3 may have further inlets and outlets if needed, e.g. for feeding or removing further liquid (typically at the bottom of the separators) or gaseous streams (typically at the top of the separators, such as degassing outlets 5A and 5B).

Further, the first separator 2 comprises first, second and third compartments 22,26,28 and the second separator 3 comprises first, second and third compartments 32,36,38. Again, further compartments may be present, if needed.

With respect to the first separator 2, the first compartment 22 has a first overflow weir 23, a second overflow weir 24 and an underflow weir 25. The underflow weir 25 divides the first compartment 22 into first and second zones 22A and 22B. In case the system 1 is intended for the separation of a feed stream obtained from a well that has been subjected to chemical EOR, then the volume contained in zone 22A between the first overflow weir 23 and the underflow 25 is typically above 1000 liter (*1*). The second overflow weir 24 is preferably positioned lower than the first overflow weir 23. Also, the second overflow weir 24 is positioned downstream of the underflow weir 25, when determined for the first liquid phase (having the highest density in first compartment 22) that is to overflow the second overflow weir 24 from zone 22B to enter second compartment 26. The second compartment 26 can receive liquid (i.e. the first liquid phase) present in zone 22B and overflowing the second overflow weir 24 of the first compartment 22. The second compartment 26 has an outlet 27 for removing the first liquid phase from the first separator 2 of the system 1. The third compartment 28 can receive liquid (i.e. second and third liquid phases) present in zone 22A and overflowing the first overflow weir 23 of the first compartment 22. The third compartment 28 has an outlet 29 for removing the second and third liquid phase from the first separator 2 as stream 50; stream 50 is fed into the second separator 3 at inlet 31.

Similar to the first separator 2, with respect to the second separator 3 the first compartment 32 has a first overflow weir 33, a second overflow weir 34 and an underflow weir 35. The underflow weir 35 divides the first compartment 32 into first and second zones 32A and 32B. Again, in case the system 1 is intended for the separation of a feed stream obtained from a well that has been subjected to chemical EOR, then the volume contained in zone 32A between the first overflow weir 33 and the underflow 35 is typically above 1000 liter (*1*). The second overflow weir 34 is preferably positioned lower than the first overflow weir 33. Also, the second overflow weir 34 is positioned downstream of the underflow weir 35, when determined for the second liquid phase (having the highest density in first compartment 32 of the second separator 3) that is to overflow the second overflow weir 34 from zone 32B to enter third compartment 38. The third compartment 38 can receive liquid (i.e. the second liquid phase) present in zone 32B and overflowing the second overflow weir 34 of the first compartment 32. The third compartment 38 has an outlet 39 for removing the second liquid phase as stream 30 from the second separator 3 of the system 1. The second compartment 36 can receive liquid (i.e. third liquid phases) present in zone 32A and overflowing the first overflow weir 33 of the first compartment 32. The second compartment 36 has an outlet 37 for removing the third liquid phase as stream 40 from the second separator 2 of the system 1.

Preferably, and as shown in Fig. 1, the inlets 21,31 feed into the first compartments 22,32, and preferably in zones 22A,32A between the first overflow weirs 23,33 and the underflow weirs 25,35 of the first compartments 22,32. Also, it is preferred that the overflow and underflow weirs comprise substantially vertically arranged baffles. In the embodiment of Figs. 1 and 2, the overflow weirs are connected to the bottom wall of the first and second separators 2,3, whilst the underflow weirs are connected to the top wall of the first and second separators 2,3. The person skilled in the art will readily understand how to select the relative heights of the underflow and overflow weirs dependent on e.g. the densities of the various phases to be separated.

During use of the system 1 of Figures 1 and 2, the feed stream 10 (indicated as "bulk" in the Figures) is fed at the inlet 21 of the first separator 2, into the first compartment 22 thereof. In the case that the feed stream is obtained from a well subjected to chemical EOR at least three liquid phases are removed from the system 1; the first liquid phase comprises water, the second liquid phase comprises an emulsion of water and oil and the third liquid phase comprises oil. Further phases such as liquid phases and gaseous phases may be present in the feed stream 10, although any solid material is preferably removed in advance. Also some mixtures of phases (such as the "bulk" fed at inlet 21 and the (mixture of) "oil and emulsion" present in stream third compartment 28 of the first separator 2, stream 50 and the first compartment 32 of the second separator 3) may be present which separate by means of gravitation whilst being processed in the system 1.

The first liquid phase (water; being the heaviest phase) at least partially underflows weir 25 of the first compartment 22 of the first separator 2 and is - from zone 22B - allowed to overflow the second overflow weir 24 of the first compartment 22 to enter the second compartment 26. Subsequently, the first liquid phase in the second compartment 26 is removed from the system 1 as stream 20 via the outlet 27.

The second liquid phase (emulsion of water and oil) and the third liquid phases (oil) overflow - from zone 22A - the first overflow weir 23 of the first compartment 22 to enter the third compartment 28; the second and third liquid phases are removed from the third compartment 28 of the first separator 2 as stream 50 at outlet 29 and fed into the first inlet 31 of the second separator 3 into the first compartment 32 thereof. The second liquid phase (emulsion of water and oil; being the heaviest phase in first compartment 32) at least partially underflows weir 35 of the first compartment 32 and is - from zone 32B of the third compartment 32 - allowed to overflow the second overflow weir 34 of the first compartment 32 to enter the third compartment 38. The second liquid phase (emulsion of water and oil) in the third compartment 38 is removed from the system 1 as stream 30 via outlet 39. The emulsion of water and oil may be subjected to further treatment in order to remove the oil therefrom, such as by increasing or lowering the pH, removing the detergents, etc.

In zone 32A of the first compartment 32 the third liquid phase (oil) is allowed to overflow the first overflow weir 33 of the first compartment 32 to enter the second compartment 36. The third liquid phase (oil) in the third compartment 36 is removed from the system 1 as stream 40 via outlet 37.

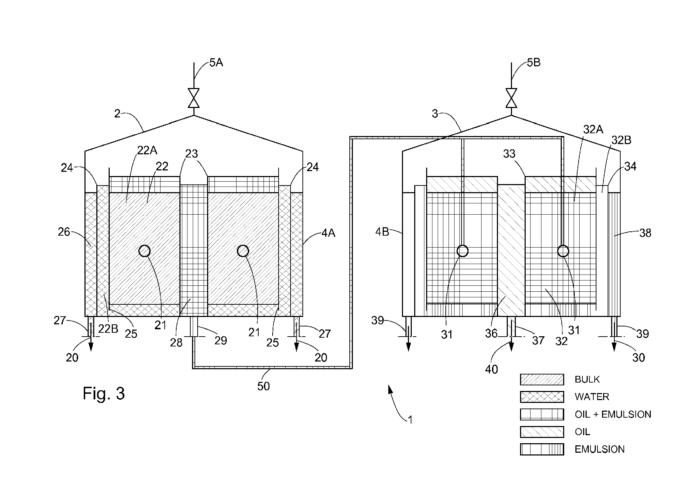

Fig. 3 schematically shows a schematic side view of a second embodiment of a system 1 in accordance with the present invention, in which the first and second separators 2,3 are in the form of a tank and hence have a substantially cylindrical shaped vertically oriented outer walls 4A and 4B.

The person skilled in the art will readily understand that many modifications may be made without departing from the scope of the invention. As an example, the feed stream 10 preferably has a temperature below the boiling temperature of water at the prevailing pressure, preferably in the range of from 30 to 95°C, preferably from 50 to 90°C, in order to expedite the separation between the water and the other liquid phases.

Also, although the system 1 according to the present invention is preferably kept as simple as possible, the system 1 may comprises heaters in e.g. zone 22A. Also, the first and second separators 2,3 may have inlets for gases or liquids which may help in separation of the various liquid phases.

## Claims

1. A system (1) for separating a feed stream (10) comprising at least three liquid phases into at least three different liquid streams (20,30,40), the system (1) comprising a first separator (2) and a second separator (3), wherein
- the first separator (2) comprises: an inlet (21) for receiving the feed stream (10); a first compartment (22) having a first overflow weir (23), a second overflow weir (24) and an underflow weir (25); a second compartment (26) that can receive liquid overflowing the second overflow weir (24) of the first compartment (22), the second compartment (26) having an outlet (27); a third compartment (28) that can receive liquid overflowing the first overflow weir (23) of the first compartment (22), the third compartment (28) having an outlet (29); and
- the second separator (3) comprises: an inlet (31) for receiving fluid leaving the outlet (29) of the third compartment (28) of the first separator (2); a first compartment (32) having a first overflow weir (33), a second overflow weir (34) and an underflow weir (35); a second compartment (36) that can receive liquid overflowing the first overflow weir (33) of the first compartment (32), the second compartment (36) having an outlet (37); a third compartment (38) that can receive liquid overflowing the second overflow weir (34) of the first compartment (32), the third compartment (38) having an outlet (39).

2. The system (1) according to claim 1, wherein the inlet (21) of the first separator (2) feeds into the first compartment (22), preferably between the first overflow weir (23) and the underflow weir (25) of the first compartment (22).

3. The system (1) according to claim 1 or 2, wherein the inlet (31) of the second separator (3) feeds into the first compartment (32), preferably between the first overflow weir (33) and the underflow weir (35) of the first compartment (32).

4. The system (1) according to any one of claim 1-3, wherein the overflow and underflow weirs comprise substantially vertically arranged baffles.

5. A method for separating a feed stream (10) comprising at least three liquid phases into at least three different liquid streams (20,30,40), the method comprising at least the steps of:
(a) feeding the feed stream (10) at an inlet (21) of a first separator (2) into a first compartment (22) thereof;
(b) allowing a first liquid phase to overflow a second overflow weir (24) of the first compartment (22) to enter a second compartment (26) and removing the first liquid phase in the second compartment (26) from the first separator (2) via an outlet (27);
(c) allowing a second and third liquid phase to overflow a first overflow weir (23) of the first compartment (22) to enter a third compartment (28);
(d) removing the second and third liquid phase in the third compartment (28) from the first separator (2) via an outlet (29) and feeding it at a first inlet (31) of a second separator (3) into a first compartment (32) thereof;
(e) allowing the second liquid phase to overflow a second overflow weir (34) of the first compartment (32) to enter a third compartment (38) and removing the second liquid phase in the third compartment (38) from the second separator (3) via an outlet (39);
(f) allowing the third liquid phase to overflow a first overflow weir (33) of the first compartment (32) to enter a second compartment (36) and removing the third liquid phase in the second compartment (36) from the second separator (3) via an outlet (37).

6. The method according to claim 5, wherein the density of the first liquid phase is greater than the density of the second liquid phase and wherein the density of the second liquid phase is greater than the density of the third liquid phase.

7. The method according to claim 5 or 6, wherein the first liquid phase comprises water, the second liquid phase comprises an emulsion of water and oil and the third liquid phase comprises oil.

8. The method according to any one of claims 5-7, wherein the feed stream (10) is obtained from a well that has been subjected to chemical Enhanced Oil Recovery (chemical EOR).

9. The method according to any one of claims 5-8, wherein the first liquid phase, after being fed to the first compartment (22) and before overflowing the second overflow weir (24) of the first compartment (22) of the first separator (2) underflows an underflow weir (25).

10. The method according to any one of claims 5-9, wherein the second liquid phase, after entering the first compartment (32) and before overflowing the second overflow weir (34) of the first compartment (32) of the second separator (3) underflows an underflow weir (35).

11. The method according to any one of claims 5-10, wherein the feed stream (10) has a temperature below the boiling temperature of water at the prevailing pressure, preferably in the range of from 30 to 95°C.
